(19) Europäisches Patentamt
European Patent Office
Office européen des brevets

(11) Numéro de publication: **0 023 187**
**B1**

# (12) FASCICULE DE BREVET EUROPEEN

(45) Date de publication du fascicule du brevet: **10.08.83**

(51) Int. Cl.[3]: **C 08 G 77/08**

(21) Numéro de dépôt: **80420089.7**

(22) Date de dépôt: **16.07.80**

(54) **Procédé de polycondensation des polysiloxanes comportant des groupements hydroxysilyles en présence d'un métal alcalin ou alcalino-terreux et d'un composé polyhétéromacropolycyclique.**

(30) Priorité: **18.07.79 FR 7919128**

(43) Date de publication de la demande: **28.01.81 Bulletin 81/4**

(45) Mention de la délivrance du brevet: **10.08.83 Bulletin 83/32**

(84) Etats contractants désignés: **BE DE FR GB**

(56) Documents cités:
FR-A-2 310 372
FR-A-2 353 589

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Milliet, Claude, 78, rue du Puits Vieux, F-69800 Saint-Priest (FR)**

(74) Mandataire: **Chichery, Guy et al, RHONE-POULENC RECHERCHES Centre de Recherches de Saint-Fons Service Brevets B.P. 62, F-69190 Saint-Fons (FR)**

EP 0 023 187 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Procédé de polycondensation des polysiloxanes comportant des groupements hydroxysilyles en présence d'un métal alcalin ou alcalino-terreux et d'un composé polyhétéromacropolycyclique

La présente invention concerne un procédé de polycondensation de polysiloxanes à groupements hydroxysilyles.

Il est bien connu que l'on peut polycondenser les silanols, les silanediols, les polysiloxanediols en présence de composés variés qui accélèrent la polycondensation en jouant le role d'agent de déshydratation ou de catalyseur (cf. par exemple le traité de Walter Noll: «Chemistry and Technology of silicones», édition 1968, pp. 212 à 218).

Parmi les agents de déshydratation, on peut citer, d'une part, les composés acides tels que les acides sulfurique et phosphorique, les chlorures d'acides et, d'autre part, des composés non acides tels que les isocyanates, les esters boriques... Tous ces composés doivent être utilisés en proportion stœchiométrique.

Parmi les catalyseurs, on peut citer les hydracides halogénés, les catalyseurs basiques tels que les hydroxydes alcalins, et les amines telles que la triéthylamine. Enfin, on peut également activer la réaction de polycondensation en utilisant des composés organométalliques de métaux tels que le plomb, l'étain, le zirconium, l'aluminium, le calcium, le sodium, le potassium...

Ces divers catalyseurs sont en outre réputés favoriser également la réaction d'équilibrage des liaisons siloxaniques par ouverture de ces dernières avec polymérisation ultérieure des liaisons ainsi libérées et de ce fait formation de composés cycliques volatils [«Journal of Polymer Science», *59*, 259-269 (1962)]. Il apparaît alors obligatoire d'effectuer, après la polycondensation, un traitement de dévolatilisation afin d'obtenir ultérieurement des élastomères organosiliciques ayant des propriétés satisfaisantes.

On a alors préconisé dans le brevet français N° 2168439 d'utiliser, en tant que catalyseur de polycondensation, de l'aluminium, celui-ci étant éventuellement recouvert d'une couche d'oxyde. Un tel catalyseur selon le brevet N° 2168439 ne produit pas de réactions de transposition des liaisons siloxaniques, mais la cinétique de polycondensation demeure faible. Il est d'ailleurs à préciser que les catalyseurs basiques ou acides usuels précédemment définis ne permettent également d'obtenir qu'une vitesse de polycondensation relativement lente.

Il était donc opportun de définir un catalyseur de polycondensation des polysiloxanes à groupements hydroxysilyles terminaux qui permette, à l'aide de quantités réduites, d'obtenir avec une vitesse rapide de polycondensation un polysiloxane condensé de masse moléculaire élevée et ne renfermant pas ou pratiquement pas de polysiloxanes de masse moléculaire peu élevée, en ayant ainsi évité les réactions de rééquilibrage de liaisons siloxaniques qui auraient engendré ces derniers.

Plus précisément, l'objet de la présente invention est alors constitué par un procédé de polycondensation des organopolysiloxanes comportant des groupements hydroxysilylés, caractérisé en ce que l'on utilise en tant que système destiné à catalyser la polycondensation un métal ou un composé métallique alcalin ou alcalino-terreux associé à un composé polyhétéromacropolycyclique appelé agent cryptant et qui sera défini plus loin.

Les organopolysiloxanes peuvent être de nature très variée. Il peut s'agir de polysiloxanes α,ω-bishydroxysilylés. Il peut également s'agir de polysiloxanes ramifiés, par exemple obtenus par cohydrolyse d'organochlorosilanes mono-, di-, tri- ou tétrachlorés, utilisés en proportions variées et renfermant une proportion relativement importante de diorganodichlorosilane.

Il peut s'agir enfin de polysiloxanes réticulés contenant une proportion relativement importante de motifs siloxaniques tri- ou tétrafonctionnels. A titre indicatif, les polysiloxanes ramifiés ou réticulés sont obtenus habituellement à partir des organochlorosilanes suivants:

$SiCl_4$, $CH_3SiCl_3$, $C_6H_5SiCl_3$, $(CH_3)_2SiCl_2$, $(CH_3)(CH_2{=}CH)SiCl_2$, $CH_3(C_6H_5)SiCl_2$, $(C_6H_5)_2SiCl_2$ $(CH_3)_3SiCl$, $(CH_3)_2(C_6H_5)SiCl$, $(CH_3)_2(CH_2{=}CH)SiCl$.

Le rapport entre le nombre total de groupements organiques liés aux atomes de silicium et le nombre total d'atomes de silicium est habituellement compris entre 0,8 et 2,5. Les divers organopolysiloxanes comportant des groupements hydroxysilylés sont, par exemple, décrits dans le chapitre 6 du traité de Walter Noll précédemment cité.

D'une manière générale, les groupements organiques qui sont liés aux divers atomes de silicium des polysiloxanes comportant des groupements hydroxysilyles peuvent être de nature très variée. Ces radicaux, qui peuvent être identiques ou différents, peuvent représenter:

— des radicaux alkyles ou halogénoalkyles ayant de 1 à 5 atomes de carbone et comportant de 1 à 6 atomes de chlore et/ou de fluor,

— des radicaux cycloalkyles et halogénocycloalkyles ayant de 3 à 8 atomes de carbone et contenant de 1 à 4 atomes de chlore et/ou de fluor,

— des radicaux aryles, alkylaryles et halogénoaryles ayant de 6 à 8 atomes de carbone et contenant de 1 à 4 atomes de chlore et/ou de fluor,

— des radicaux cyanoalkyles ayant 3 ou 4 atomes de carbone.

A titre illustratif, on peut citer parmi les radicaux organiques liés aux atomes de silicium les radicaux suivants: les groupes méthyle; éthyle; propyle; isopropyle; butyle; isobutyle; α-pentyle; t-butyle; chlorométhyle; dichlorométhyle; α-chloroéthyle α,β-dichloroéthyle; fluorométhyle; difluorométhyle; α,β-difluoroéthyle; trifluoro-3,3,3 propyle; trifluorocyclopropyle; trifluoro-4,4,4 butyle; heptafluoro-3,3,4,4,5,5 pentyle; β-cyanoéthyle; γ-cyanopropyle; phényle; p-chlorophényle; m-chlorophényle; dichloro-3,5 phényle; trichlorophényle; tétrachlorophényle; o-, p-, ou m-tolyle; α,α,α-trifluorotolyle; xylyles comme diméthyl-2,3 phényle ou diméthyl-3,4 phényle.

Préférentiellement, les radicaux organiques liés aux atomes de silicium sont des radicaux méthyle, phényle, vinyle, ces radicaux pouvant être éventuellement halogénés, ou bien encore des radicaux cyanoalkyle.

Le procédé selon l'invention s'applique particulièrement bien à la polycondensation des organopolysiloxanes linéaires α,ω-bis-hydroxysilyles en permettant rapidement l'obtention d'huile polysiloxanique à OH terminaux et ayant une viscosité élevée (supérieure à 50 000 mPa·s à 20°). Les polysiloxanes mis en œuvre durant la réaction de polycondensation peuvent contenir dans une même molécule un nombre varié d'atomes de silicium; celui-ci est en général compris entre 3 et 1000.

Selon une variante du procédé de la présente invention, on peut polycondenser simultanément divers polysiloxanes à groupements hydroxysilyles, ces polysiloxanes différant entre eux par la nature des radicaux organiques liés aux atomes de silicium, par la valeur du rapport entre le nombre total de groupements organiques liés aux atomes de silicium et le nombre total d'atomes de silicium, par la valeur des masses moléculaires moyennes. On peut, selon cette méthode, obtenir des copolycondensats blocs constitués par exemple de motifs polydiméthylpolysiloxaniques et polydiphénylpolysiloxaniques.

L'agent cryptant peut être de nature très variée: c'est un composé polyhétéromacrobicyclique répondant à la formule générale:

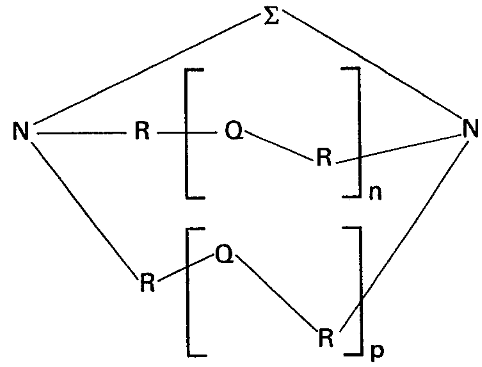

(I)

dans laquelle les divers symboles ont la signification suivante:

— Σ représente:

un radical divalent de formule:

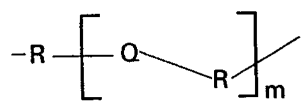

(II)

ou un radical divalent de formule:

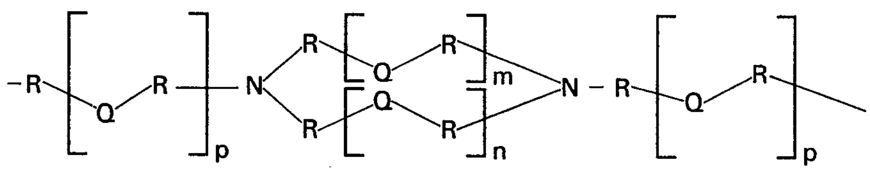

(III)

Dans ces formules I, II et III, les divers symboles ont la signification suivante:

— les radicaux R, identiques ou différents, représentent des radicaux divalents hydrocarbonés,

— les radicaux Q, identiques ou différents, représentent soit un atome d'oxygène ou de soufre, soit un radical divalent hydrocarboné,

— les symboles m, n, p sont des nombres entiers égaux à 1, 2 ou 3.

Les agents cryptants sont par exemple décrits dans le brevet français N° 2201304 et dans les articles suivants: «Journal of the American Chemical Society», *89*, 7017 (1967); *ibid.*, *89*, 2495 (1967); «Chemiker Zeitung», *97* (11), 1073, pp. 600-661; «Tetrahedron letters», *15*, pp. 1225-1228 (1973); *ibid.*, *29*, pp. 1629-1658 (1973).

Plus précisément, lorsque R et Q représentent un radical divalent hydrocarboné, celui-ci comporte en général de 2 à 12 atomes de carbone et peut alors représenter un radical alkylène ou alcénylène droit ou ramifié, un radical cycloalkylène éventuellement substitué par des radicaux alkyles, un radical phénylène ou alkylphénylène ou dialkylphénylène. Les groupes R, qui sont fixés aux deux atomes d'azote extrêmes de la formule I, ont de préférence une portion aliphatique fixée à l'atome d'azote correspondant. A titre préférentiel, R et Q (lorsqu'il représente un radical hydrocarboné) sont des groupements alkylènes et alcénylènes à chaîne droite ou ramifiée ayant de 2 à 8 atomes de carbone comme les groupes éthylène, propylène, butylène, hexylène et leurs analogues non saturés.

Les composés polyhétéromacrobicycliques préférés sont ceux qui sont représentés par les formules suivantes:

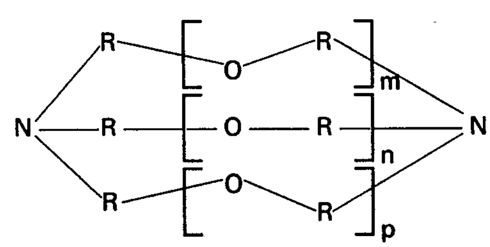

(IV)

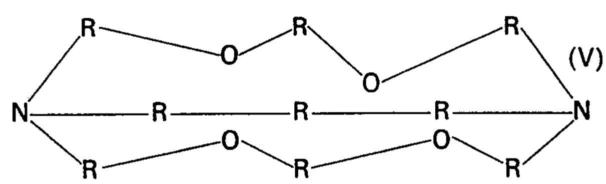

(V)

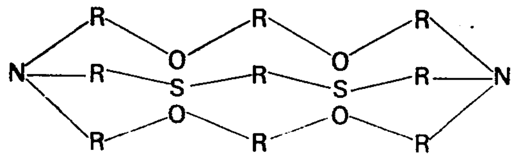
(VI)

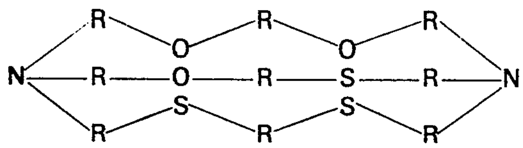
(VII)

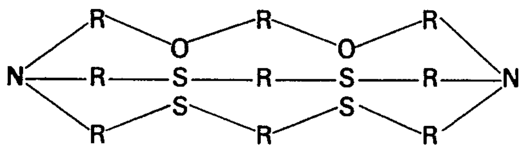
(VIII)

Dans ces formules, les divers symboles ont la signification suivante:

— m, n, p représentent des nombres entiers égaux à 1, 2 ou 3,

— R représente l'un des radicaux suivants:

$-CH_2 - CH_2-$

$-CH_2 - CH_2 - CH_2-$

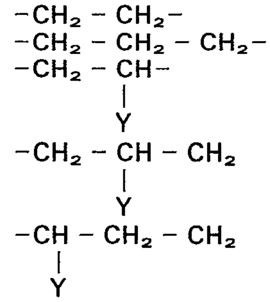

— ou encore 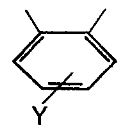

Y représentant un radical alcoyle droit ou ramifié ayant de 1 à 4 atomes de carbone.

Plus particulièrement, les composés polyhétéromacrobicycliques préférés sont représentés par les formules générales suivantes:

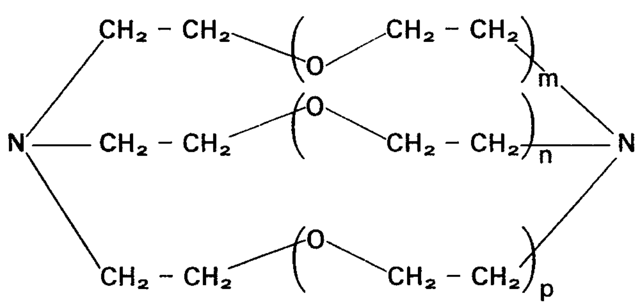
(IX)

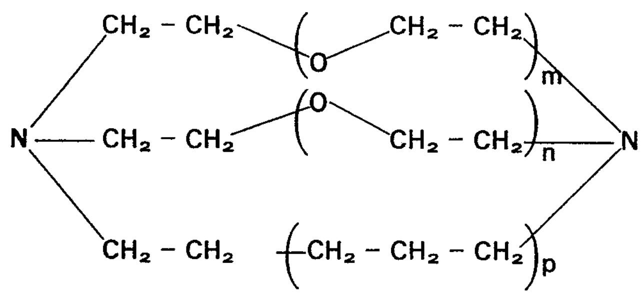
(X)

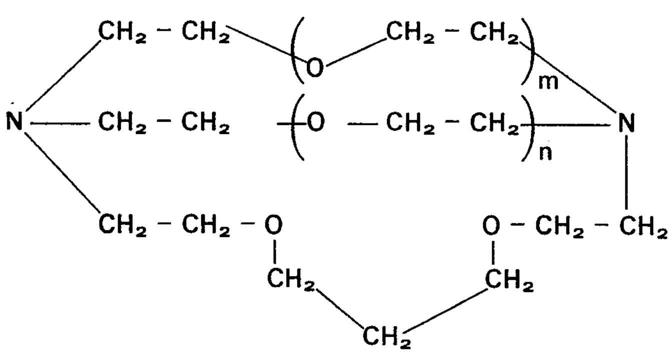
(XI)

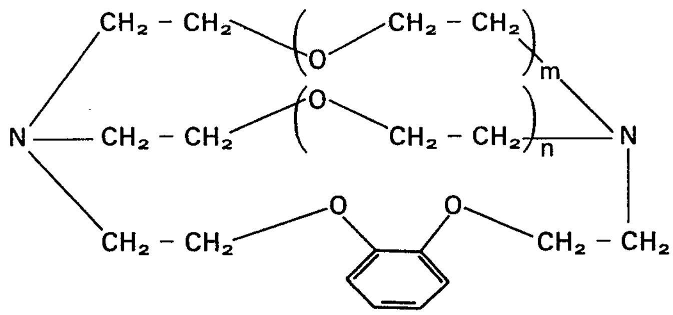

(XII)

Des exemples typiques particuliers d'agents cryptants qui correspondent à la formule générale suivante:

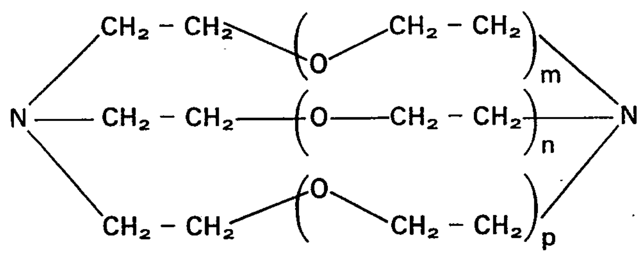

(IX)

sont ceux dans la formule desquels les nombres n, et p sont des nombres entiers de 1 à 3 et où m est égal à 2 ou 3.

— Pour m = 2, n = 1, p = 1
diaza-1,10 tétraoxa-4,7,13,18 bicyclo (5,5,8) eicosane, appelé composé (211).

— Pour m = 2, n = 2, p = 1
diaza-1,10 pentaoxa-4,7,13,16,21 bicyclo (8,8,5) tricosane, appelé composé (221).

— Pour m = 2, n = 2, p = 2
diaza-1,10 hexaoxa-4,7,13,16,21,24 bicyclo (8,8,8) hexacosane, appelé composé (222).

— Pour m = 3, n = 2, p = 2
diaza-1,13 heptaoxa-4,7,10,16,19,24,27 bicyclo (8,8,11) nonacosane, appelé composé (322).

On peut également citer à titre illustratif les autres agents cryptants suivants:

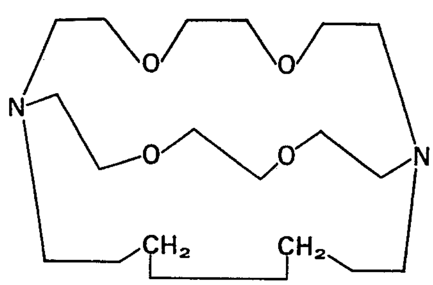

diaza-1,10 tétraoxa-13,16,21,24 bicyclo (8,8,8) hexacosane appelé composé (220)

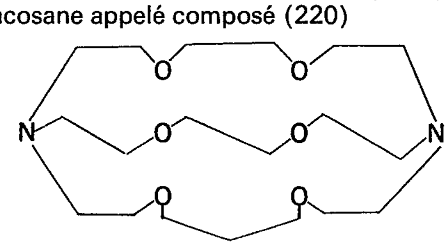

diaza-1,10 hexaoxa-4,7,13,16,21,25 bicyclo (8,8,9) heptacosane, appelé composé (22p)

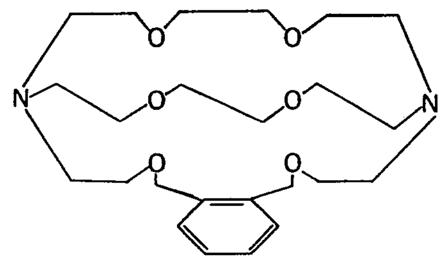

diaza-1,10 hexaoxa-4,7,13,16,21,24 benzo-5,6 bicyclo (8,8,8) hexacosane, appelé composé (22B)

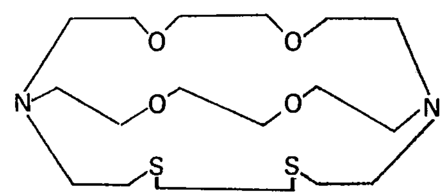

diaza-1,10 tétraoxa-4,7,13,16 dithia-21,24 bicyclo (8,8,8) hexacosane, appelé (402S)

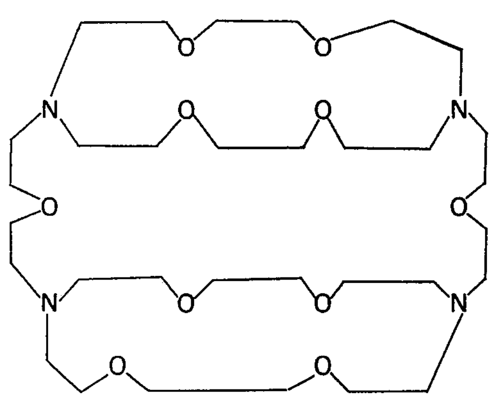

tétraaza-1,7,16,22 décaoxa-4,10,13,19,25,28,33,36,41,44 tricyclo ($20.8^{1,22}.8^{7,16}$) hexatétracontane appelé $T_2O$.

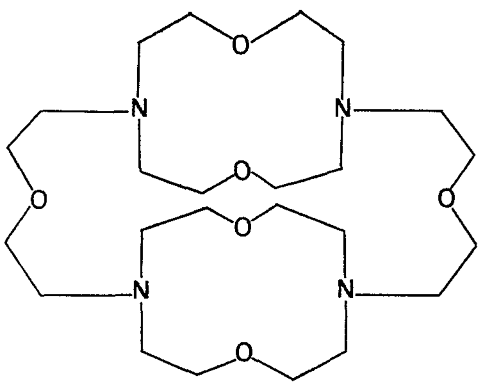

On peut utiliser, dans le procédé conforme à l'invention, tout métal alcalin ou alcalino-terreux, ceux-ci pouvant être introduits sous toute forme usitée en polymérisation anionique. On peut ainsi notamment utiliser les hydroxydes, les amidures, les alcoolates, les siliconates, les silanolates. Il est par ailleurs possible d'introduire l'élément métallique directement sous forme de métal divisé. On utilise préférentiellement les dérivés du lithium, du sodium, du potassium, du rubidium et du cæsium, ceux-ci étant préférentiellement associés aux agents cryptants de formules IV à VIII ou IX à XII.

Le système destiné à catalyser la réaction de polycondensation selon l'invention peut être utilisé en proportions très variées. Il se révèle particulièrement remarquable du fait qu'il peut être mis en œuvre en très faible quantité. Habituellement, on utilise de 0,1 à 1000 mg et préférentiellement de 1 à 100 mg d'équivalent d'hydroxyde de métal alcalin ou alcalino-terreux par kilo de polysiloxane hydroxysilyle. L'équivalent d'hydroxyde pour un dérivé alcalin ou alcalino-terreux quelconque est exprimé par le poids de la quantité d'hydroxyde du métal que l'on devrait ajouter et qui correspondrait au même nombre d'atomes-grammes de métal alcalin ou alcalino-terreux que celui du dérivé alcalin ou alcalino-terreux utilisé. Par ailleurs le rapport molaire cryptant/équivalent hydroxyde de métal alcalin ou alcalino-terreux est habituellement compris entre 0,005 et 3 et préférentiellement entre 0,01 et 1.

La température de la polycondensation peut se situer dans la gamme usuelle de températures comprise entre 25 et 200° et de préférence entre 80 et 180°. Durant la polycondensation, l'eau est éliminée du milieu réactionnel au fur et à mesure de sa formation par tout moyen approprié (distillation azéotropique; élimination de l'eau sous pression réduite...). Dans ces conditions, la technique revendiquée permet de réduire dans une proportion très importante la durée de la réaction de polycondensation. Par rapport au catalyseur alcalin utilisé seul, le gain peut atteindre et dépasser 50 à 75%. Lorsque la viscosité souhaitée est atteinte, il est recommandé de désactiver le système catalytique par addition d'une très faible quantité d'un composé acide (acide acétique, acide phosphorique, $CO_2$...).

Ces polycondensats selon l'invention comportent des groupements hydroxysilyles terminaux. On peut également, cependant, obtenir des polysiloxanes polycondensés dont les extrémités ne soient pas constituées par des groupements hydroxysilyles. Il suffit pour cela, après la polycondensation, d'ajouter un composé susceptible de réagir avec les groupements hydroxysilyles terminaux. Dans ce contexte, on citera le triméthylchlorosilane, le diméthylvinylchlorosilane, le méthyldivinylchlorosilane... On notera que de tels composés modifient les extrémités des polycondensats et désactivent en même temps le système catalytique.

La réaction de polycondensation des polysiloxanes comportant des groupements hydroxysilyles du type linéaire, ramifié ou réticulé, peut éventuellement être réalisée en milieu solvant. Dans ce contexte, les hydrocarbures aliphatiques ou aromatiques éventuellement halogénés conviennent bien.

Le procédé selon l'invention présente, sur le plan industriel, un intérêt considérable, puisqu'il permet en particulier d'obtenir au départ d'oligomères linéaires polydiméthylpolysiloxaniques α,ω-dihydroxylés de faible masse moléculaire, et avec une cinétique rapide, des huiles polydiméthylsiloxaniques α,ω-dihydroxylés de haute viscosité (supérieure à 50 000 mPa·s à 20°) et renfermant moins de 1% de polysiloxanes de masse moléculaire peu élevée (cyclosiloxane du type $D_x$; avec $3 \leqslant x \leqslant 10$; ou encore polysiloxanes linéaires). De telles huiles sont directement utilisables, sans aucun autre traitement ultérieur, pour l'obtention d'élastomères organopolysiloxaniques présentant d'excellentes propriétés mécaniques.

Les exemples qui suivent illustrent l'invention.

*Exemples*

On charge dans un réacteur agité en verre 150 g d'un polydiméthylpolysiloxane α,ω-bis-(hydroxydiméthylsilylé) de masse moléculaire en nombre de 2900 (viscosité 120 mPa·s à 25°) une quantité variée de cryptant (2,2,2) de formule:

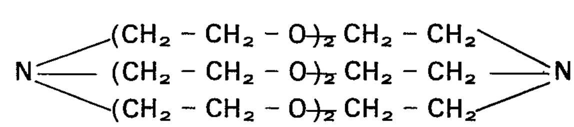

Après avoir chauffé le mélange à la température désirée, on ajoute le métal alcalin (potassium ajouté sous forme de silanolate de K en quantité correspondant à 1,66 mg de KOH).

La pression du réacteur est alors rapidement amenée à 26,7 mbar (20 mm de mercure) de façon à éliminer l'eau au fur et à mesure de sa formation. La réaction est arrêtée à l'instant choisi par désactivation du catalyseur à l'aide d'anhydride carbonique. Après refroidissement, l'avancement de la réaction est évalué par la mesure de la viscosité du polycondensat à 25°.

Le tableau précise les conditions opératoires et les résultats obtenus:

| Essai | Quantité de métal alcalin (mg KOH) | Quantité de cryptant (2,2,2) (mg) | T (°C) | Durée (min) | Viscosité à 25° (mPa·s) | Taux de volatil (%) |
|---|---|---|---|---|---|---|
| 1 | 1,6 | 0,3 | 125 | 13 | 114000 | inférieur à 1,5 |
| 2 | 1,6 | 0,3 | 135 | 8 | 60400 | inférieur à 1,5 |

A titre comparatif, on reproduit le même essai que l'essai N° 1 sans ajouter de cryptant. Après 13 min de polycondensation, la viscosité n'est que de 8700 mPa·s.

Le taux de volatil est mesuré de la manière suivante: on introduit exactement 2 g d'huile dans une coupe en aluminium que l'on porte à 150° durant 2 h. Après refroidissement, la coupe est pesée, ce qui permet d'évaluer les pertes.

## Revendications

1. Procédé de polycondensation des organopolysiloxanes comportant des groupements hydroxysilyles, caractérisé en ce qu'on utilise, en tant que système destiné à assurer la catalyse de la réaction de polycondensation, un métal alcalin ou alcalino-terreux pouvant être introduit sous toute forme usitée en polymérisation anionique associé à un composé polyhétéromacropolycyclique désigné sous le nom d'agent cryptant et ayant pour formule générale:

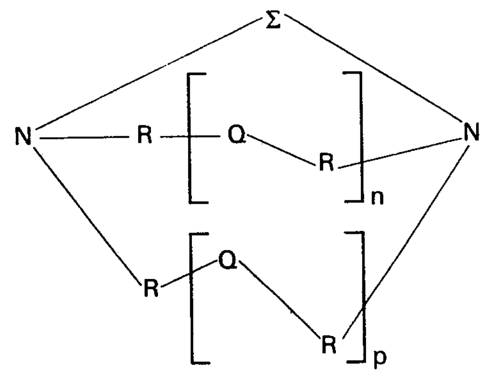

(I)

dans laquelle les divers symboles représentent:

— Σ: un radical divalent de formule:

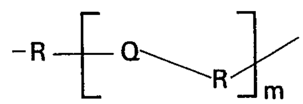

(II)

ou un radical divalent de formule:

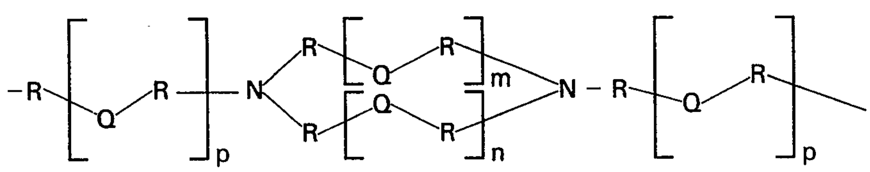

(III)

— R: des radicaux hydrocarbonés divalents, identiques ou différents,

— Q: des radicaux hydrocarbonés divalents, identiques ou différents, un atome d'oxygène ou un atome de soufre,

— m, n, p: des nombres entiers égaux à 1, 2 ou 3.

2. Procédé selon la revendication 1 dans lequel l'agent cryptant mis en œuvre est représenté par l'une des formules suivantes:

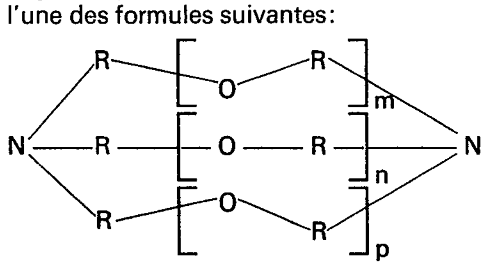

(IV)

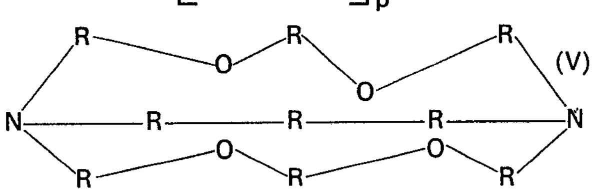

(V)

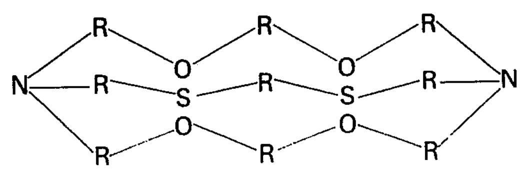

(VI)

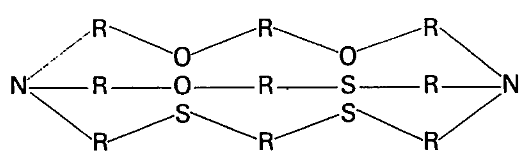

(VII)

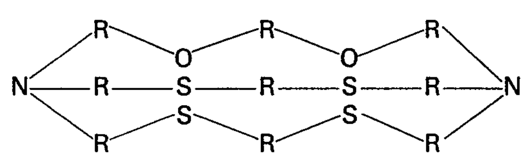

(VIII)

Dans ces formules, les divers symboles ont la signification suivante:

— m, n, p représentent des nombres entiers égaux à 1, 2 ou 3

— R représente l'un des radicaux suivants:

$-CH_2-CH_2-$

$-CH_2-CH_2-CH_2-$

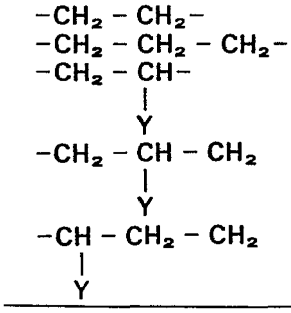

— ou encore 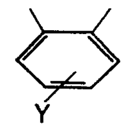

Y représentant un radical alcoyle droit ou ramifié ayant de 1 à 4 atomes de carbone.

3. Procédé selon la revendication 1 dans laquelle l'agent cryptant mis en œuvre est représenté par l'une des formules suivantes:

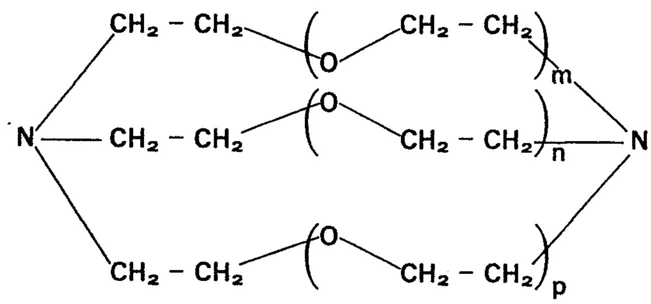

(IX)

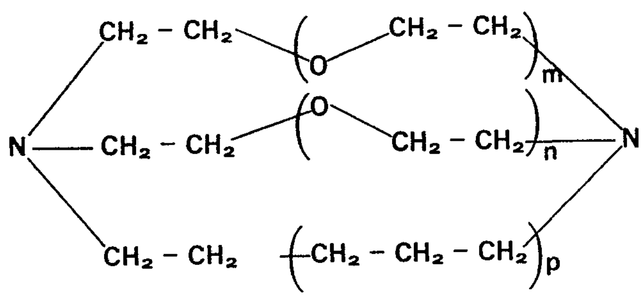

(X)

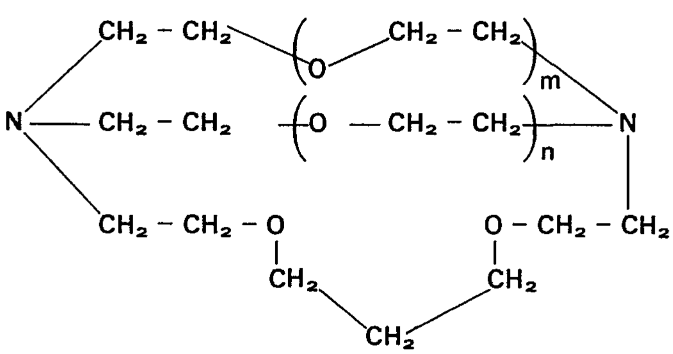

(XI)

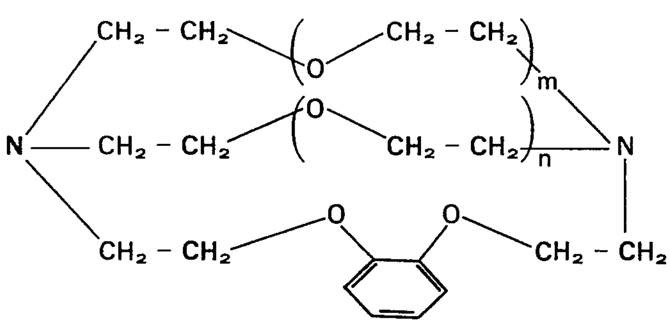

(XII)

4. Procédé selon l'une des revendications 1, 2 ou 3, dans lequel le métal alcalin ou alcalino-terreux mis en œuvre est le lithium, le sodium, le potassium, le rubidium ou le cæsium.

5. Procédé selon l'une des revendications précédentes, dans lequel on met en œuvre de 0,1 à 1000 mg d'équivalent d'hydroxyde de métal alcalin ou alcalino-terreux par kilo de polysiloxane hydroxysilylé.

6. Procédé selon l'une des revendications

précédentes, dans lequel le rapport molaire agent cryptant/équivalent d'hydroxyde de métal alcalin ou alcalino-terreux est compris entre 0,005 et 3.

7. Procédé selon l'une des revendications précédentes, dans lequel les groupements organiques qui sont liés aux atomes de silicium du polysiloxane à groupements hydroxysilyles représentent:

— des radicaux alkyles ou halogénoalkyles ayant de 1 à 5 atomes de carbone et comportant de 1 à 6 atomes de chlore et/ou de fluor,

— des radicaux cycloalkyles et halogénocycloalkyles ayant de 3 à 8 atomes de carbone et contenant de 1 à 4 atomes de chlore et/ou de fluor,

— des radicaux aryles, alkylaryles et halogénoaryles ayant de 6 à 8 atomes de carbone et contenant de 1 à 4 atomes de chlore et/ou de fluor,

— des radicaux cyanoalkyles ayant de 3 à 4 atomes de carbone.

8. Procédé selon la revendication 7, dans lequel les groupements organiques qui sont liés aux atomes de silicium du polysiloxane à groupements hydroxysilyles sont des radicaux méthyle, phényle, vinyle, ces radicaux étant éventuellement halogénés, ou encore des radicaux cyanoalkyles.

9. Procédé selon la revendication 8, dans lequel le polysiloxane à groupement hydroxysilylé est un polydiorganosiloxane linéaire α,ω-bis-hydroxysilylé.

10. Procédé selon la revendication 9, dans lequel le polysiloxane à groupement hydroxysilyle est un polysiloxane ramifié.

## Patentansprüche

1. Verfahren zur Polykondensation von Hydroxysilylgruppen enthaltenden Organopolysiloxanen, dadurch gekennzeichnet, dass man als Katalysatorsystem für die Polykondensationsreaktion ein Alkali- oder Erdalkalimetall, das in jeder für anionische Polymerisation gebräuchlichen Form eingeführt werden kann, zusammen mit einer polyheteromakropolycyclischen Verbindung verwendet, die als Kryptandsubstanz bezeichnet wird und die allgemeine Formel hat:

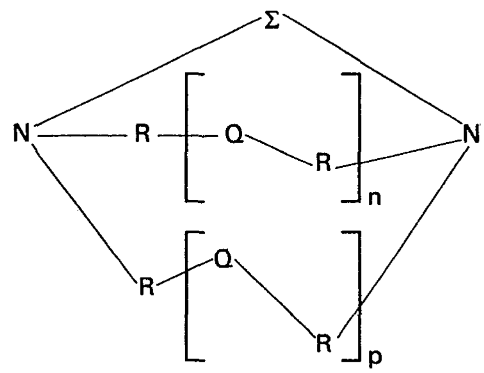
(I)

in der die verschiedenen Symbole die folgende Bedeutung haben:

— Σ ist ein zweiwertiger Rest der Formel:

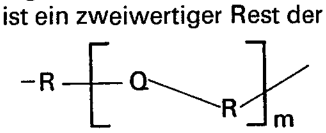
(II)

oder ein zweiwertiger Rest der Formel:

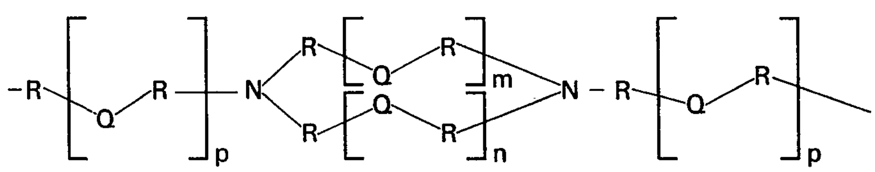
(III)

— R sind gleiche oder verschiedene zweiwertige Kohlenwasserstoffreste,

— Q sind gleiche oder verschiedene zweiwertige Kohlenwasserstoffreste, ein Sauerstoffatom oder ein Schwefelatom, und

— m, n, p sind ganze Zahlen gleich 1, 2 oder 3.

2. Verfahren nach Anspruch 1, bei dem die eingesetzte Kryptandsubstanz durch eine der folgenden Formeln dargestellt ist:

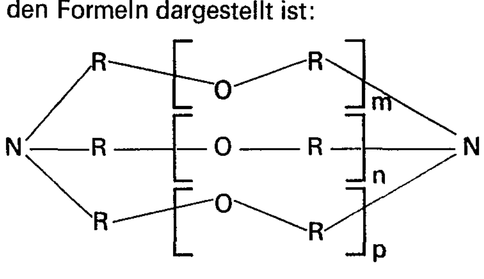
(IV)

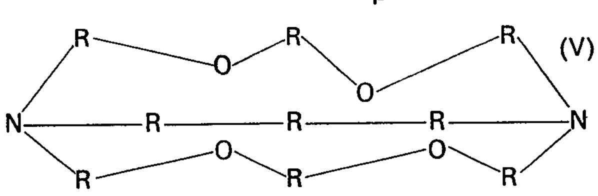
(V)

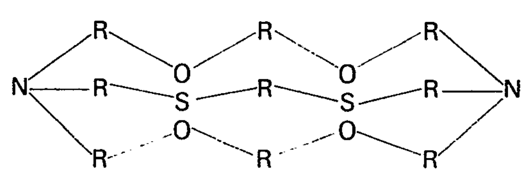
(VI)

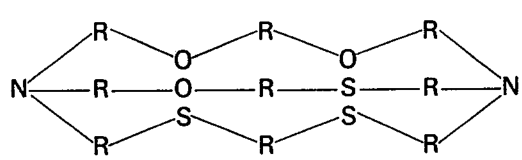
(VII)

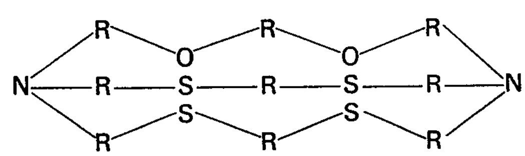
(VIII)

In diesen Formeln haben die verschiedenen Symbole die folgende Bedeutung:

— m, n, p bedeuten ganze Zahlen gleich 1, 2 oder 3,

— R bedeutet einen der folgenden Reste:

$-CH_2-CH_2-$
$-CH_2-CH_2-CH_2-$
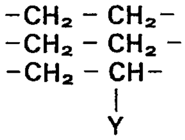
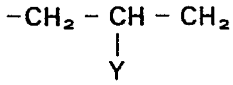
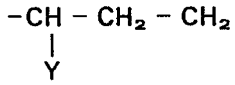 oder

auch 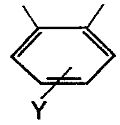 wobei

Y einen geradkettigen verzweigten Alkylrest mit 1 bis 4 Kohlenstoffatomen bedeutet.

3. Verfahren nach Anspruch 1, bei dem die eingesetzte Kryptandsubstanz durch eine der folgenden Formeln dargestellt wird:

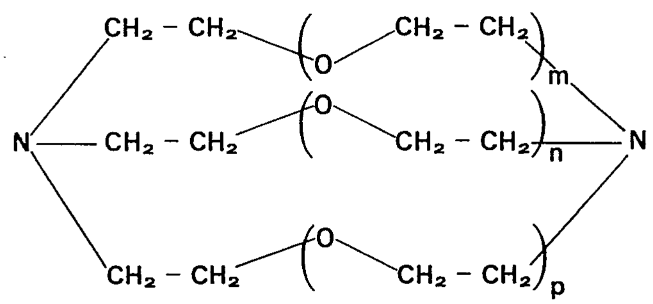 (IX)

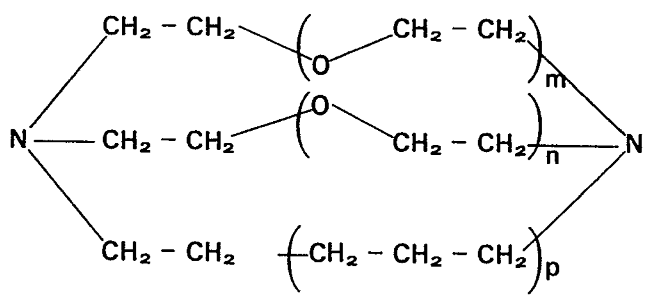 (X)

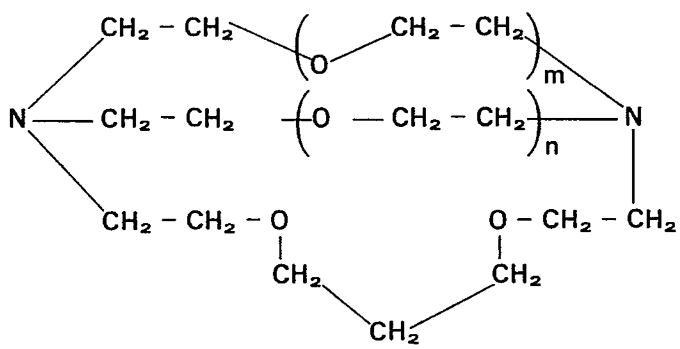 (XI)

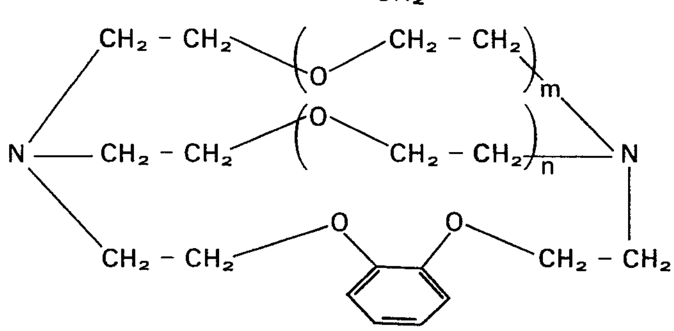 (XII)

4. Verfahren nach einem der Ansprüche 1, 2 oder 3, bei dem das eingesetzte Alkali- oder Erdalkalimetall Lithium, Natrium, Kalium, Rubidium oder Cäsium ist.

5. Verfahren nach einem der vorangehenden Ansprüche, bei dem man 0,1 bis 1000 mg des Äquivalents des Alkali- oder Erdalkalihydroxids pro Kilo des hydroxysilylierten Polysiloxans einsetzt.

6. Verfahren nach einem der vorangehenden Ansprüche, bei dem das Molverhältnis von Kryptandsubstanz zu Äquivalent des Alkali- oder Erdalkalihydroxids 0,005 bis 3 beträgt.

7. Verfahren nach einem der vorangehenden

Ansprüche, bei dem die mit den Siliziumatomen des Polysiloxans mit Hydroxysilylgruppen verbundenen organischen Gruppen bedeuten

— Alkyl- oder Halogenalkylreste mit 1 bis 5 Kohlenstoffatomen und 1 bis 6 Chlor- und/oder Fluoratomen;

— Cycloalkyl- oder Halogencycloalkylreste mit 3 bis 8 Kohlenstoffatomen enthaltend 1 bis 4 Chlor- und/oder Fluoratome;

— Aryl-, Alkaryl- und Halogenarylreste mit 6 bis 8 Kohlenstoffatomen enthaltend 1 bis 4 Chlor- und/oder Fluoratome; und

— Cyanoalkylreste mit 3 bis 4 Kohlenstoffatomen.

8. Verfahren nach Anspruch 7, bei dem die organischen Gruppen, die mit dem Siliziumatomen des Polysiloxans mit Hydroxysilylgruppen verbunden sind, Cyanoalkylreste oder gegebenenfalls halogenierte Methyl-, Phenyl- oder Vinylreste sind.

9. Verfahren nach Anspruch 8, bei dem das Polysiloxan mit Hydroxysilylgruppen ein geradkettiges α,ω-Bishydroxysilylpolydiorganoliloxan ist.

10. Verfahren nach Anspruch 9, bei dem das Polysiloxan mit Hydroxysilylgruppen ein verzweigtes Polysiloxan ist.

## Claims

1. Process for the polycondensation of organopolysiloxanes containing hydroxysilyl groups, characterised in that an alkali metal or alkaline-earth metal introduced as any kind in use in anionic polymerization associated with a polyheteromacrpolycyclic compound designated by the name cryptating agent and having the general formula:

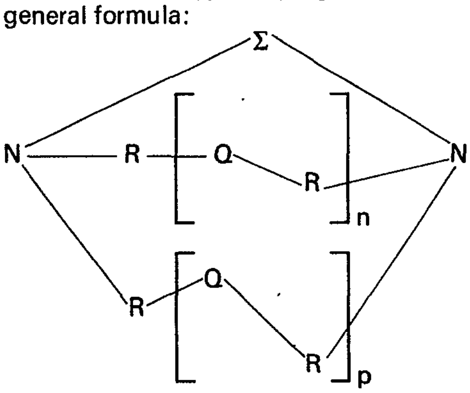

(I)

in which the various symbols represent:

— Σ: a divalent radical of the formula:

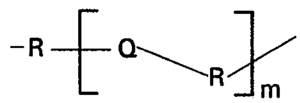

(II)

or a divalent radical of the formula:

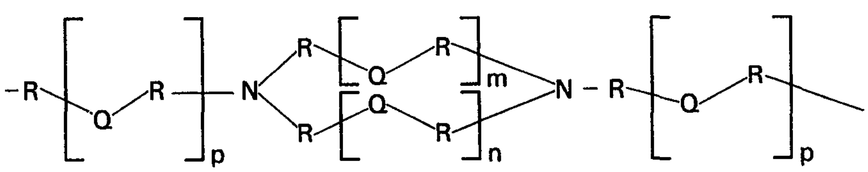

(III)

— R: identical or different, divalent hydrocarbon radicals,

— Q: identical or different, divalent hydrocarbon radicals, an oxygen atom or a sulphur atom, and

— m, n and p: integers equal to 1, 2 or 3,

is used as a system intended for catalysing the polycondensation reaction.

2. Process according to claim 1, in which the cryptating agent used is represented by one of the following formulae:

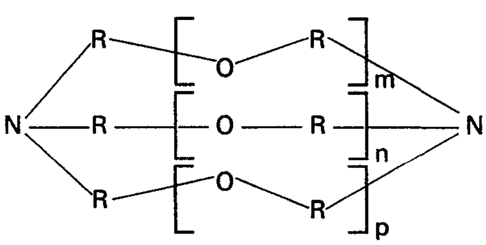

(IV)

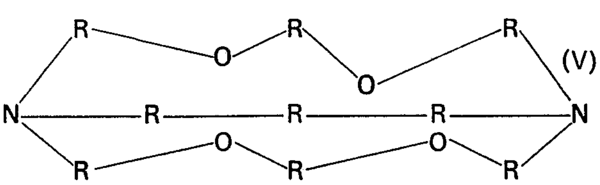

(V)

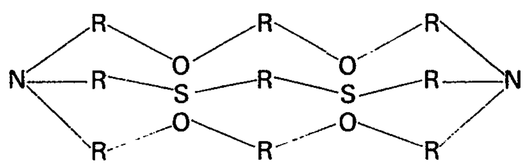

(VI)

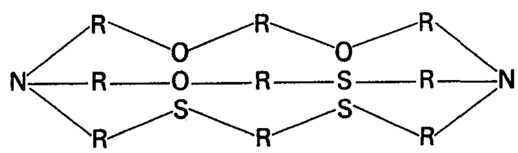

(VII)

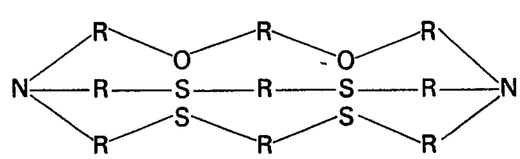

(VIII)

In these formulae, the various symbols have the following meaning:

— m, n and p represent integers equal to 1, 2 or 3, and

— R represents one of the following radicals:

$-CH_2-CH_2-$

$-CH_2-CH_2-CH_2-$

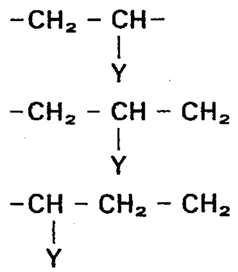

— or also 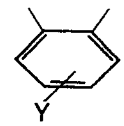

Y representing a linear or branched alkyl radical having from 1 to 4 carbon atoms.

3. Process according to claim 1, in which the cryptating agent used is represented by one of the following formulae:

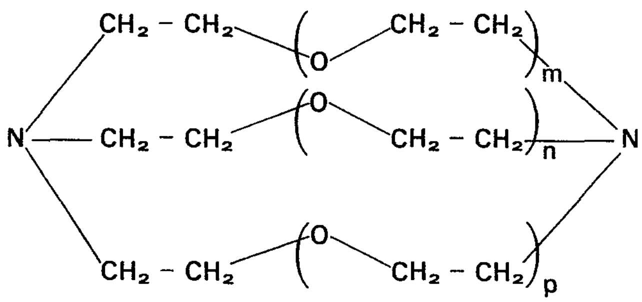

(IX)

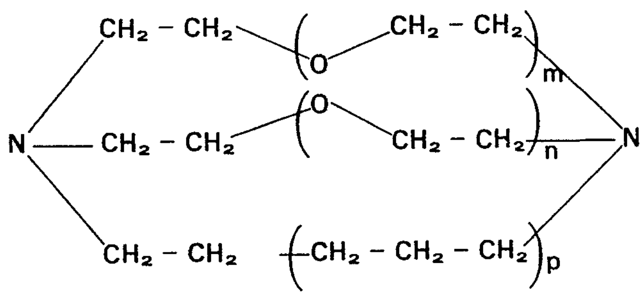

(X)

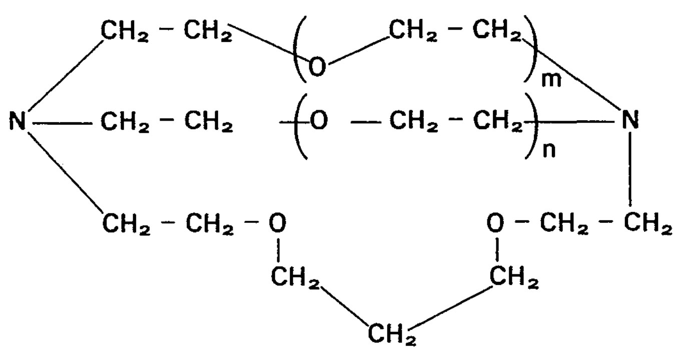

(XI)

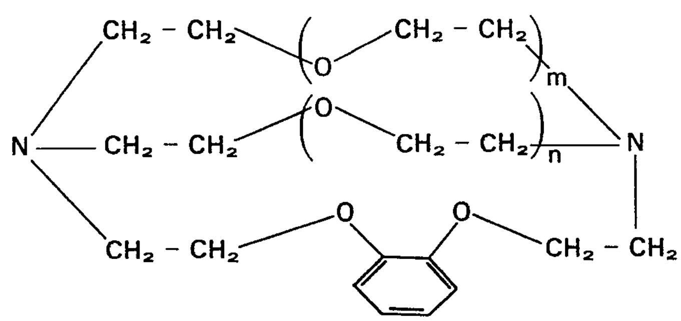

(XII)

4. Process according to one of claims 1, 2 or 3, in which the alkali metal or alkaline-earth metal used is lithium, sodium, potassium, rubidium or caesium.

5. Process according to one of the preceding claims, in which from 0.1 to 1,000 mg equivalents of alkali metal hydroxide or alkaline-earth metal hydroxide are used per kilogram of hydroxysilylpolysiloxane.

6. Process according to one of the preceding claims, in which the molar ratio cryptating agent/equivalents of alkali metal hydroxide or alkaline-earth metal hydroxide is between 0.005 and 3.

7. Process according to one of the preceding

claims, in which the organic groups which are bonded to the silicon atoms in the polysiloxane containing hydroxysilyl groups represent:

— alkyl radicals or halogenoalkyl radicals having from 1 to 5 carbon atoms and containing from 1 to 6 chlorine and/or fluorine atoms,

— cycloalkyl radicals and halogenocycloalkyl radicals having from 3 to 8 carbon atoms and containing from 1 to 4 chlorine and/or fluorine atoms,

— aryl radicals, alkylaryl radicals and halogenoaryl radicals having from 6 to 8 carbon atoms and containing from 1 to 4 chlorine and/or fluorine atoms, or

— cyanoalkyl radicals having from 3 to 4 carbon atoms.

8. Process according to claim 7, in which the organic groups which are bonded to the silicon atoms in the polysiloxane containing hydroxysilyl groups are methyl, phenyl or vinyl radicals, these radicals being optionally halogenated, or also cyanoalkyl radicals.

9. Process according to claim 8, in which the polysiloxane with hydroxysilyl groups is a linear α,ω-bis-hydroxysilylpolydiorganosiloxane.

10. Process according to claim 9, in which the polysiloxane with hydroxysilyl groups is a branched polysiloxane.